# EUROPEAN PATENT APPLICATION

(11) **EP 4 800 878 A1**
(43) Date of publication of application: **02.09.2026**
(21) Application number: 25169611.8
(22) Date of filing: 10.04.2025
(51) Int. Cl.: H02J 7/00

(54) **CHARGE AND DISCHARGE CONTROL CIRCUIT AND BATTERY MANAGEMENT SYSTEM**

(30) Priority: 27.02.2025 CN 202510222601
(71) Applicant: Shenzhen Ampere Time Digital Energy Technology Co., Ltd., Shenzhen, Guangdong 518000 (CN)
(72) Inventor: XU, Defei, Shenzhen, Guangdong, 518000 (CN); ZHAO, Menglong, Shenzhen, Guangdong, 518000 (CN); LU, Haijun, Shenzhen, Guangdong, 518000 (CN)
(74) Representative: Herrero & Asociados, S.L.

(57) **Abstract**

Disclosed are a charge and discharge control circuit and a battery management system. The control circuit comprises a power supply, a charge and discharge switch circuit, an analog front-end circuit, and a drive circuit; wherein the analog front-end circuit is connected to the drive circuit and configured to output a first drive signal to the drive circuit; the drive circuit is connected to the power supply and the charge and discharge switch circuit, and configured to establish or disconnect electrical conduction between the power supply and the charge and discharge switch circuit based on the first drive signal; the charge and discharge switch circuit is configured to connect a battery and a charge and discharge connection terminal, and to establish electrical conduction between the battery and the charge and discharge connection terminal when receiving a first power supply signal provided by the power supply.

## Description

### Cross-Reference to Related Applications

This application claims priority to Chinese Patent Application No. 202510222601.5, filed on February 27, 2025, the content of which is incorporated herein by reference in its entirety.

### Technical Field

The present application relates to the technical field of battery management, specifically to a charge and discharge control circuit and a battery management system.

### Background

With the widespread application of energy storage technology and electric vehicles, the demand for battery protection boards in the market has been increasing. The battery protection board plays a crucial role in the battery management system, primarily responsible for monitoring the battery's voltage, temperature, and charge and discharge status, and protecting the battery by controlling switches. Currently, MOSFETs are adopted as switch components for most battery protection boards to manage battery charge and discharge by controlling the on and off states of the MOSFETs.

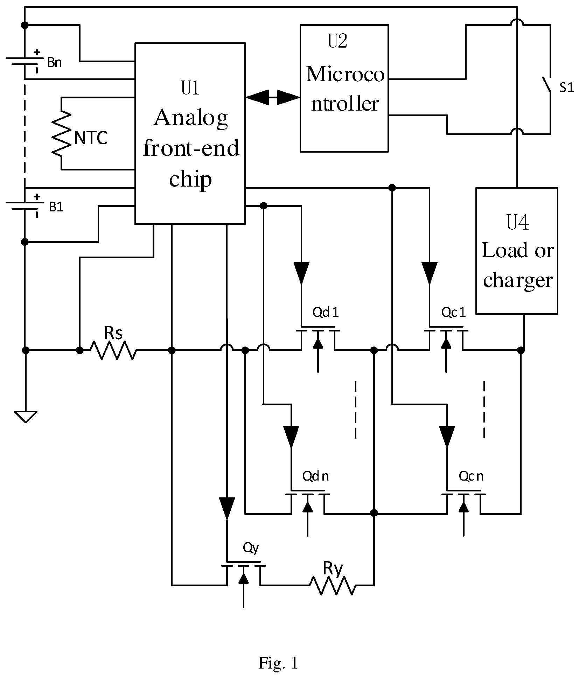

Figure 1 shows the structure of a circuit for a battery protection board currently on the market. B1...Bn represent batteries, Rs is a power-type sampling resistor, NTC is a temperature sensor, Qd1...Qdn are discharge MOSFETs, Qc1...Qcn are charge MOSFETs, Qy is a pre-discharge MOSFET, and Ry is a pre-discharge resistor. U1 is an analog front-end chip, responsible for the collection of battery voltage and temperature sensing and executing protection actions. U2 is a microcontroller that can communicate with the analog front-end chip (U1). S1 is a switch button. U4 is the load or charger, with the positive terminal of battery Bn connected to the positive terminal of load or charger (U4), the negative terminal of load or charger (U4) connected to one end of the charge MOSFETs (Qc1...Qcn), the other end of the charge MOSFETs (Qc1...Qcn) connected to one end of the discharge MOSFETs (Qd1...Qdn), and the other end of the discharge MOSFETs (Qd1...Qdn) connected to one end of the power-type sampling resistor (Rs). The other end of the power-type sampling resistor (Rs) is connected to the negative electrode of battery (B 1). One end of the pre-discharge MOSFET (Qy) is connected to one end of the discharge MOSFETs (Qd1...Qdn), the other end of the pre-discharge MOSFET (Qy) is connected to one end of the pre-discharge resistor (Ry), and the other end of the pre-discharge resistor (Ry) is connected to the other end of the discharge MOSFETs (Qd1...Qdn). That is, the pre-discharge MOSFET (Qy) and the pre-discharge resistor (Ry) are connected in series, then connected in parallel with the discharge MOSFETs (Qd1...Qdn).

When the charger is connected or the switch is pressed, it activates the analog front-end (U1) to close the charge MOSFETs (Qc1...Qcn) and the discharge MOSFETs (Qd1...Qdn), completing the charge and discharge loop. However, the MOS drive signal output by the existing analog front-end (U1) is weak, and when driving the MOSFETs to close, switch oscillations are likely to occur. This causes frequent switching, increases power consumption, and could even damage the MOSFETs. If a load current is present, the issue becomes more severe. Therefore, improving the stability and safety of battery charging and discharging is an urgent technical problem to address.

### Summary of the Invention

The embodiments of the present application provide a charge and discharge control circuit and a battery management system, aiming at addressing the issue of poor stability and safety in the current battery charging and discharging processes.

In one aspect, a charge and discharge control circuit is provided, comprising a power supply, a charge and discharge switch circuit, an analog front-end circuit, and a drive circuit; wherein
the analog front-end circuit is connected to the drive circuit and configured to output a first drive signal to the drive circuit;
the drive circuit is connected to the power supply and the charge and discharge switch circuit, and configured to establish or disconnect electrical conduction between the power supply and the charge and discharge switch circuit based on the first drive signal;
the charge and discharge switch circuit is configured to connect a battery and a charge and discharge connection terminal, and to establish electrical conduction between the battery and the charge and discharge connection terminal when receiving a first power supply signal provided by the power supply.

Furthermore, the charge and discharge control circuit comprises a main control circuit; wherein
the analog front-end circuit is connected to the charge and discharge switch circuit and the main control circuit, and is configured to collect a charge and discharge signal to the main control circuit; and
the main control circuit is configured to output a first control signal to the analog front-end circuit based on the charge and discharge signal, to enable the analog front-end circuit to output the first drive signal based on the first control signal.

Furthermore, the main control circuit is connected to the drive circuit, and is configured to output a second drive signal to the drive circuit based on the charge and discharge signal;
the drive circuit is configured to establish or disconnect electrical conduction between the power supply and the charge and discharge switch circuit based on the first drive signal and the second drive signal.

Furthermore, the charge and discharge switch circuit comprises a sampling circuit and a switch transistor circuit;
a first end of the sampling circuit is connected to the battery and a ground terminal, a second end of the sampling circuit is connected to a first end of the switch transistor circuit, a second end of the switch transistor circuit is connected to the charge and discharge connection terminal, and a third end of the switch transistor circuit is connected to the drive circuit; and
the analog front-end circuit is connected to the first end and the second end of the sampling circuit.

Furthermore, the drive circuit comprises a first voltage divider resistor circuit, a second voltage divider resistor circuit, a first transistor, a second transistor, and a third transistor;
a first end of the first voltage divider resistor circuit is connected to a third end of the first transistor, a second end of the first voltage divider resistor circuit is grounded, and a third end of the first voltage divider resistor circuit is connected to the analog front-end circuit;
a first end of the first transistor is connected to a first end of the second voltage divider resistor circuit, and a second end of the first transistor is grounded;
a second end of the second voltage divider resistor circuit is connected to the power supply and a first end of the second transistor, a third end of the second voltage divider resistor circuit is connected to a third end of the second transistor, and a second end of the second transistor is connected to the charge and discharge switch circuit; and
a first end of the third transistor is connected to the power supply, a second end of the third transistor is connected to the drive circuit, and a third end of the third transistor is connected to the second end of the second transistor.

Furthermore, the charge and discharge control circuit comprises a discharge circuit; wherein
the discharge circuit is connected to the drive circuit and the switch transistor circuit, and is configured to discharge energy stored in a parasitic capacitance of the switch transistor circuit when the switch transistor circuit is turned off.

Furthermore, the discharge circuit comprises a fourth transistor, a fifth transistor, and a first discharge resistor circuit;
a first end of the fourth transistor is connected to a third end of the fifth transistor and a third end of the fourth transistor, a second end of the fourth transistor is connected to the charge and discharge switch circuit, and the third end of the fourth transistor is connected to the drive circuit;
a first end of the fifth transistor is connected to the charge and discharge switch circuit, the second end of the fifth transistor is connected to a first end of the first discharge resistor circuit, and a second end of the first discharge resistor circuit is grounded.

Furthermore, the discharge circuit comprises a sixth transistor and a first diode;
an anode of the first diode is connected to the drive circuit, the third end of the fourth transistor is connected to a third end of the sixth transistor, and a cathode of the first diode is connected to the first end of the fourth transistor, the drive circuit is connected to the third end of the fifth transistor;
the first end of the sixth transistor is connected to the drive circuit, and the second end of the sixth transistor is connected to the first end of the first discharge resistor circuit.

Furthermore, the discharge circuit comprises a second diode and a second discharge resistor circuit; and
a first end of the second discharge resistor circuit is connected to the switch transistor circuit, a second end of the second discharge resistor circuit is connected to a anode of the second diode, and a cathode of the second diode is connected to the first end of the fifth transistor.

Furthermore, the switch transistor circuit comprises at least two gallium nitride transistors; and the at least two gallium nitride transistors are connected in parallel.

Furthermore, the discharge circuit comprises a third discharge resistor circuit; and
one third discharge resistor circuit is connected in series between a first end and a third end of each gallium nitride transistor.

In another aspect, a battery management system is provided, comprising a battery and the charge and discharge control circuit described above; and
the battery is connected to the charge and discharge control circuit.

Embodiments of the present application provide a charge and discharge control circuit and a battery management system. The charge and discharge control circuit includes a power supply, an analog front-end circuit, a drive circuit, and a charge and discharge switch circuit. By connecting the analog front-end circuit to the drive circuit, a first drive signal is output to the drive circuit. The drive circuit is connected to the power supply and the charge and discharge switch circuit, and based on the first drive signal, the electrical conduction between the power supply and charge and discharge switch circuit is either established or disconnected. The charge and discharge switch circuit is used to connect the battery and the charge and discharge connection terminal. When the first power supply signal provided by the power supply is received, the electrical conduction between the battery and the charge and discharge connection terminal is established. As a result, the first drive signal drives the drive circuit to establish electrical conduction between the power supply and the charge and discharge switch circuit, thereby driving the charge and discharge switch circuit to turn on by a more stable and reliable first power supply signal. This prevents oscillatory opening and closing of the charge and discharge switch circuit, preventing it from burning out and ensuring the stability and safety of battery charging and discharging.

### Brief description of the drawings

To clearly illustrate the technical solutions of the embodiments of this application, the following briefly introduces the accompanying drawings used in the description of the embodiments. Obviously, the drawings in the following description are only some embodiments of this application. For those skilled in the art, other drawings can be obtained based on these drawings without creative effort.
Fig. 1 is a schematic diagram of a battery protection board described in the background art.
Fig. 2 is a schematic diagram of a charge and discharge control circuit according to an embodiment of the present application.
Reference signs in the drawings are as follows:
1. Main control circuit; 2. Analog front-end circuit; 3. Drive circuit; 31. First voltage divider resistor circuit; 32. Second voltage divider resistor circuit; 4. Charge and discharge switch circuit; 41. Sampling circuit; 42. Switch transistor circuit; 5. Discharge circuit; 51. First discharge resistor circuit; 52. Second discharge resistor circuit; 53. Third discharge resistor circuit.

### Detailed description of preferred embodiments

The technical solutions in the embodiments of the present application will be clearly and completely described below with reference to the drawings in the embodiments of this application. Obviously, the described embodiments are merely part of the embodiments of this application, not all of them. Based on the embodiments in this application, all other embodiments obtained by those of ordinary skill in the art without creative effort belong to the protection scope of this application.

It should be understood that the exemplary embodiments may be embodied in many different forms and should not be construed as being limited to the exemplary embodiments set forth herein. Rather, these embodiments are provided so that this disclosure will be thorough and complete, and will fully convey the protection scope of this application to those skilled in the art. In the drawings, like reference signs refer to like elements throughout, and the size and relative sizes of layers and regions may be exaggerated for clarity.

It should be understood that when an element or layer is referred to as being "on", "adjacent to", "connected to", "coupled to" another element or layer, it can be directly on, adjacent to, connected to, coupled to the other element or layer, or intervening elements or layers may be present. Conversely, when an element is referred to as being "directly on", "directly adjacent to", "directly connected to" or "directly coupled to" another element or layer, there are no intervening elements or layers present. It should also be understood that although terms such as "first", "second", "third" etc., may be used to describe various elements, components, regions, layers, and/or parts, these elements, components, regions, layers, and/or parts should not be limited by these terms. These terms are used only to distinguish one element, component, region, layer, or part from another. Thus, without departing from the teachings of this application, a first element, component, region, layer, or part discussed below could be termed a second element, component, region, layer, or part.

Spatial terms such as "below", "under", "down", "above", "on" and "up" may be used here for convenience of description to describe the relationship between one element or feature and other elements or features shown in the figures. It should be understood that in addition to the orientations shown in the figures, the spatial relationship terms are intended to include different orientations of devices in use and operation. For example, if the device in the figures is turned upside down, then the elements or features described as "below" or "under" other elements or features would be "above" or "on" other elements or features. Therefore, the exemplary terms "below" or "under" may include the orientations of "above" or "on". The device may be otherwise oriented (rotated by 90 degrees or other orientations) and the spatial description terms used here are interpreted accordingly.

The terms used here are only for the purpose of describing specific embodiments and not as a limitation of the present application. As used herein, singular forms of "a", "an" and "the/said" are also intended to include plural forms, unless the context clearly indicates otherwise. It should also be understood that the terms "comprise" and/or "include" used in this specification specify the presence of said features, integers, steps, operations, elements and/or components, but do not exclude the presence or addition of one or more other features, integers, steps, operations, elements, components and/or groups. As used herein, the term "and/or" includes any and all combinations of related listed items.

For a thorough understanding of this application, detailed structures and steps will be set forth in the following description, so as to illustrate the technical solution proposed in the present application. The preferred embodiments of the present application are described in detail as follows, but besides these detailed descriptions, the present application may also have other embodiments.

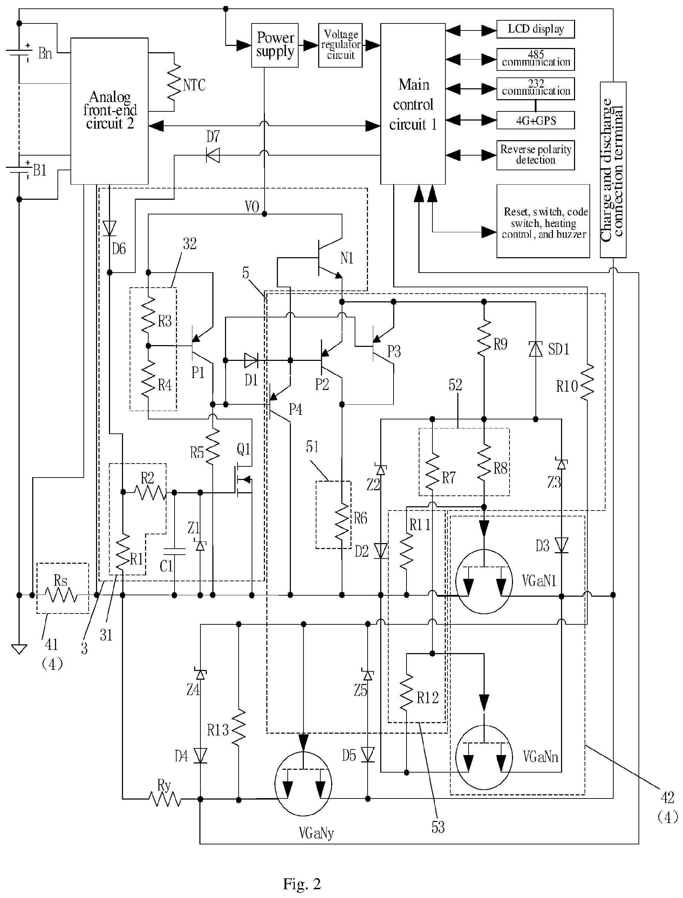

An embodiment of the present application provides a charge and discharge control circuit, as shown in Fig. 2, which includes a power supply, an analog front-end circuit 2, a drive circuit 3, and a charge and discharge switch circuit 4. The analog front-end circuit 2 is connected to the drive circuit 3 and configured to output a first drive signal to the drive circuit 3. The drive circuit 3 is connected to the power supply and the charge and discharge switch circuit 4 and is configured to establish or disconnect electrical conduction between the power supply and the charge and discharge switch circuit 4 based on the first drive signal. The charge and discharge switch circuit 4 is configured to connect a battery and a charge and discharge connection terminal, and upon receiving a first power supply signal provided by the power supply, establish electrical conduction between the battery and the charge and discharge connection terminal.

In some implementations, the power supply may be a switching power supply. An input terminal of the power supply may be connected to the battery to draw power from the battery, and a first power supply signal is output through an output terminal of the power supply. The battery includes multiple battery cells connected in series, for example, battery cells B1 to Bn.

The analog front-end circuit 2 includes an analog front-end chip. Exemplarily, the analog front-end chip is a critical component of the battery management system, configured to collect analog signals representing parameters such as battery voltage, current, and temperature, and convert the collected analog signals into digital signals for processing and analysis by the battery management system.

As an example, the charge and discharge control circuit is applied in a battery management system, which includes a battery. The charge and discharge switch circuit 4 is configured to connect the battery and the charge and discharge connection terminal. Optionally, the charge and discharge connection terminal is used to connect to a load or a charger. As an example, when the charge and discharge switch circuit 4 is turned on, the battery can be charged or discharged normally. When the charge and discharge switch circuit 4 is turned off, charging and discharging of the battery stop.

As an example, the analog front-end circuit 2 is connected to the drive circuit 3 and configured to output a first drive signal to the drive circuit 3. Exemplarily, the analog front-end circuit 2 can receive an external first control signal and output the first drive signal according to the first control signal. The first control signal may be a control signal output by the main control circuit in the charge and discharge control circuit. As an example, the analog front-end circuit 2 collects charge and discharge signals of the charge and discharge control circuit and outputs the charge and discharge signals to the main control circuit. The main control circuit, based on the charge and discharge signals, determines whether there is an abnormality in charging or discharging and outputs a corresponding first control signal to the analog front-end circuit 2, so that the analog front-end circuit 2 outputs the first drive signal to the drive circuit 3. The drive circuit 3 can then, based on the first drive signal, establish or disconnect electrical conduction between the power supply and the charge and discharge switch circuit 4.

Optionally, the charge and discharge signals include battery voltage, battery temperature, charge and discharge voltage, and charge and discharge current. Exemplarily, the analog front-end circuit 2 is connected to the battery to collect the battery voltage. The analog front-end circuit 2 is connected to a thermistor in the environment to collect the battery temperature. The analog front-end circuit 2 is connected to the charge and discharge switch circuit 4 to collect the charge and discharge voltage and the charge and discharge current. For example, a sampling circuit 41 is provided in the charge and discharge switch circuit 4, and the analog front-end circuit 2 is connected to the sampling circuit 41. When the charge and discharge switch circuit 4 is turned on, the analog front-end circuit 2 can collect the charge and discharge voltage and current from the charge and discharge switch circuit 4.

As an example, the drive circuit 3 is connected to the charge and discharge switch circuit 4 and configured to establish or disconnect electrical conduction between the power supply and the charge and discharge switch circuit 4 based on the first drive signal. The charge and discharge switch circuit 4 is configured to connect the battery and the charge and discharge connection terminal. When receiving the first power supply signal provided by the power supply, the charge and discharge switch circuit 4 establishes electrical conduction between the battery and the charge and discharge connection terminal. In this embodiment, since the switching transistors in the charge and discharge switch circuit 4 have input parasitic capacitance, the more parallel switching transistors there are in the charge and discharge switch circuit 4, the larger the parasitic capacitance becomes. However, the first drive signal output by the analog front-end circuit 2 is relatively weak and cannot directly drive the charge and discharge switch circuit 4 with parasitic capacitance. Therefore, the drive circuit 3 establishes or disconnects electrical conduction between the power supply and the charge and discharge switch circuit 4 based on the first drive signal. In this way, when the charge and discharge switch circuit 4 receives the first power supply signal provided by the power supply, it establishes electrical conduction between the battery and the charge and discharge connection terminal. Since electrical conduction between the power supply and the charge and discharge switch circuit 4 is established through the drive circuit 3, the charge and discharge switch circuit 4 is driven to conduct by the first power supply signal from the power supply. This enhances the driving capability for the charge and discharge switch circuit 4, thereby preventing oscillatory opening and closing of the charge and discharge switch circuit 4, reducing power consumption, preventing burnout of the charge and discharge switch circuit 4, and ensuring the stability and safety of battery charging and discharging.

In this embodiment, the charge and discharge control circuit includes the power supply, analog front-end circuit 2, drive circuit 3, and charge and discharge switch circuit 4. The analog front-end circuit 2 is connected to the drive circuit 3 and configured to output the first drive signal to the drive circuit 3. The drive circuit 3 is connected to the power supply and the charge and discharge switch circuit 4 and configured to establish or disconnect electrical conduction between the power supply and the charge and discharge switch circuit 4 based on the first drive signal. The charge and discharge switch circuit 4 is configured to connect the battery and the charge and discharge connection terminal. When receiving the first power supply signal provided by the power supply, it establishes electrical conduction between the battery and the charge and discharge connection terminal. In this way, the first drive signal is used to drive the drive circuit 3 to establish electrical conduction between the power supply and the charge and discharge switch circuit 4, enabling the charge and discharge switch circuit 4 to conduct under the drive of the more stable and reliable first power supply signal. This prevents oscillatory opening and closing of the charge and discharge switch circuit 4, avoids burnout of the charge and discharge switch circuit 4, and ensures the stability and safety of battery charging and discharging.

In one embodiment, the charge and discharge control circuit further includes a main control circuit 1. The analog front-end circuit 2, connected to both the charge and discharge switch circuit 4 and main control circuit 1, is configured to collect charge and discharge signals and transmit them to main control circuit 1. The main control circuit 1 is configured to output a first control signal to analog front-end circuit 2 based on the charge and discharge signals, so that analog front-end circuit 2 can output a first drive signal according to the first control signal. As an example, the main control circuit 1 includes a microcontroller unit (MCU). The main control circuit 1 is connected to analog front-end circuit 2 to receive charge and discharge signals sent by analog front-end circuit 2 and output the first control signal to the analog front-end circuit 2.

Exemplarily, when main control circuit 1 determines from the charge and discharge signals that the battery voltage, battery temperature, charge and discharge voltage, and charge and discharge current are within normal parameters, it outputs the first control signal to control analog front-end circuit 2 to output a high-level signal, which then controls the drive circuit 3 to establish electrical conduction between the power supply and the charge and discharge switch circuit 4. When the charge and discharge switch circuit 4 receives the first power supply signal, it connects the battery to the charge and discharge connection terminal, thereby enabling normal charging and discharging of the battery.

It should be understood that when main control circuit 1 determines, based on the charge and discharge signals, that any of the battery voltage, battery temperature, charge and discharge voltage, or charge and discharge current is abnormal, it outputs the first control signal to control analog front-end circuit 2 to output a low-level signal, which then controls the drive circuit 3 to disconnect the power supply and charge and discharge switch circuit 4, causing the charge and discharge switch circuit 4 to disconnect the battery from the charge and discharge connection terminal, thereby protecting the battery.

Further, the charge and discharge control circuit also includes a pre-discharge circuit. The pre-discharge circuit is connected to the battery, the charge and discharge connection terminal, the charge and discharge switch circuit 4, and the main control circuit 1, and is used to control the pre-discharge of the battery. Exemplarily, the pre-discharge circuit includes a pre-discharge resistor Ry and a pre-discharge transistor (VGaNy). Preferably, the pre-discharge transistor (VGaNy) is a gallium nitride (GaN) transistor capable of bidirectional conduction and blocking. The first end of the pre-discharge transistor (VGaNy) is the first drain, the second end is the second drain, and the third end is the gate. This configuration allows a single bidirectional GaN device to replace two back-to-back MOSFETs. The first end of the pre-discharge resistor is connected to the sampling circuit 41 in the charge and discharge circuit, and the second end of the pre-discharge resistor is connected to the first end of the pre-discharge transistor (VGaNy). The second end of the pre-discharge transistor (VGaNy) is connected to the charge and discharge connection terminal, and the third end of the pre-discharge transistor (VGaNy) is connected to the main control circuit 1. In this example, when the charge and discharge control circuit is activated and connected to the battery, the analog front-end circuit 2's analog front-end chip reads parameters such as battery voltage, temperature, and current, and transmits these parameters to the main control circuit 1. When the main control circuit 1 determines that the battery voltage, temperature, and current are normal, it outputs a high-level signal to the pre-discharge transistor (VGaNy), controlling the pre-discharge transistor (VGaNy) to turn on. This allows current limitation through the pre-discharge resistor Ry, preventing excessive current when charging the capacitor of the battery to the load or charger, thus providing short-circuit protection. When the main control circuit 1 detects that the voltage across the pre-discharge resistor Ry exceeds 90% of the total battery voltage, it determines that pre-discharge is successful. After successful pre-discharge, when main control circuit 1 determines that the battery voltage, temperature, charge and discharge voltage, and current are normal based on the charge and discharge signals, it outputs the first control signal to control analog front-end circuit 2 to output a high-level signal, thereby controlling drive circuit 3 to establish conduction between the power supply and charge and discharge switch circuit 4. When the charge and discharge switch circuit 4 receives the first power supply signal, it connects the battery to the charge and discharge connection terminal, enabling normal charging and discharging of the battery.

Optionally, a Zener diode Z4 is connected between the first and third ends of the pre-discharge transistor (VGaNy), and a Zener diode Z5 is connected between the second and third ends, to stabilize the voltage between the gate, first drain, and second drain of the pre-discharge transistor (VGaNy). This configuration prevents the driving voltage from exceeding the withstand voltage of the gate, first drain, and second drain, which could damage the pre-discharge transistor (VGaNy). The third end of the pre-discharge transistor (VGaNy) is connected to the main control circuit 1 through a resistor R10.

Optionally, the Zener diode Z4 is also connected in series with an isolation diode D4, and Zener diode Z5 is connected in series with an isolation diode D5. A resistor R13 is also arranged between the first and third ends of the pre-discharge transistor (VGaNy) to discharge energy stored in the parasitic capacitance of the pre-discharge transistor (VGaNy).

In one embodiment, the main control circuit 1 is also connected to the drive circuit 3, used to output a second drive signal to the drive circuit 3 based on the charge and discharge signal; the drive circuit 3 is used to establish or disconnect electrical conduction between the power supply and the charge and discharge switch circuit 4 based on the first and second drive signals.

As an example, after pre-discharge is successful, when the main control circuit 1 determines that the battery voltage, battery temperature, charge and discharge voltage, and charge and discharge current are normal based on the charge and discharge signal, it outputs a first control signal to control the analog front-end circuit 2 to output a high-level signal, i.e., the first drive signal, and simultaneously outputs the second drive signal to the drive circuit 3. Since the first drive signal output by the analog front-end circuit 2 is relatively weak, the simultaneous input of the first and second drive signals into the drive circuit 3 can improve the response speed of the drive circuit 3. This allows the drive circuit 3 to establish electrical conduction between the power supply and the charge and discharge switch circuit 4 more quickly, thus providing a faster conduction speed for the drive circuit 3.

In one embodiment, the charge and discharge switch circuit 4 includes a sampling circuit 41 and a switch transistor circuit 42. The first end of the sampling circuit 41 is connected to the battery and the ground terminal, the second end of the sampling circuit 41 is connected to the first end of the switch transistor circuit 42, the second end of the switch transistor circuit 42 is connected to the charge and discharge connection terminal, and the third end of the switch transistor circuit 42 is connected to the drive circuit 3. The analog front-end circuit 2 is connected to the first and second ends of the sampling circuit 41.

As an example, the sampling circuit 41 includes a sampling resistor Rs, with the first end of the sampling resistor Rs connected to the negative electrode of the battery and the ground terminal, and the second end of the sampling circuit 41 connected to the first end of the switch transistor circuit 42. It can be understood that the quantity and connection method of the sampling resistors Rs can be selected based on practical needs, and no restrictions are imposed here.

In this embodiment, the first end of the sampling circuit 41 is connected to the battery and the ground terminal, the second end of the sampling circuit 41 is connected to the first end of the switch transistor circuit 42, the second end of the switch transistor circuit 42 is connected to the charge and discharge connection terminal, and the third end of the switch transistor circuit 42 is connected to the drive circuit 3. The analog front-end circuit 2 is connected to the first and second ends of the sampling circuit 41. When the switch transistor circuit 42 is turned on, the electrical signal passes through the sampling circuit 41, thus allowing the sampling circuit 41 to collect the charge and discharge signal.

In one embodiment, the drive circuit 3 includes a first voltage divider resistor circuit 31, a second voltage divider resistor circuit 32, a first transistor Q1, a second transistor P1, and a third transistor N1. The first end of the first voltage divider resistor circuit 31 is connected to the third end of the first transistor Q1, the second end of the first voltage divider resistor circuit is grounded, and the third end of the first voltage divider resistor circuit 31 is connected to the main control circuit 1 and the analog front-end circuit 2. The first end of the first transistor Q1 is connected to the first end of the second voltage divider resistor circuit 32, and the second end of the first transistor Q1 is grounded. The second end of the second voltage divider resistor circuit 32 is connected to the power supply V0 and the first end of the second transistor P1, and the third end of the second voltage divider resistor circuit 32 is connected to the third end of the second transistor P1. The second end of the second transistor P1 is connected to the charge and discharge switch circuit 4. The first end of the third transistor N1 is connected to the power supply V0, the second end of the third transistor N1 is connected to the drive circuit 3, and the third end of the third transistor N1 is connected to the second end of the second transistor P1.

As an example, the first voltage divider resistor circuit 31 includes a first resistor R1 and a second resistor R2, with the first resistor R1 and second resistor R2 connected in series between the third end of the first transistor Q1 and the ground terminal. The node connecting the first resistor R1 and the second resistor R2 is connected to the main control circuit 1 and the analog front-end circuit 2. In this example, the second end of the first voltage divider resistor circuit is grounded through the sampling resistor Rs in the charge and discharge switch circuit 4.

Preferably, the third end of the first voltage divider resistor circuit 31 is connected to the analog front-end circuit 2 through an isolation diode D6, and connected to the main control circuit 1 through an isolation diode D7.

As an example, the second voltage divider resistor circuit 32 includes a third resistor R3 and a fourth resistor R4. The first end of the third resistor R3 is connected to the power supply V0 and the first end of the second transistor P1. The second end of the third resistor R3 is connected to the first end of the fourth resistor R4. The second end of the fourth resistor R4 is connected to the first end of the first transistor Q1, and the node connecting the third resistor R3 and the fourth resistor R4 is connected to the third end of the second transistor P1. The second end of the second transistor P1 is connected to the charge and discharge switch circuit 4. In this example, the second end of the second transistor P1 is connected to the charge and discharge switch circuit 4 through a resistor R5. Exemplarily, the second end of the second transistor P1 is grounded through the resistor R5 and the sampling resistor Rs. The power supply is connected to the main control circuit 1 through a voltage regulator circuit, used to power the main control circuit 1.

As an example, the first end of the third transistor N1 is connected to the power supply V0, the second end of the third transistor N1 is connected to the drive circuit 3, and the third end of the third transistor N1 is connected to the second end of the second transistor P1. Optionally, the third end of the third transistor N1 is connected to the second end of the second transistor P1 via a first diode D1. Exemplarily, the anode of the first diode D1 is connected to the second end of the second transistor P1, and the cathode of the first diode D1 is connected to the third end of the third transistor N1.

As an example, the first transistor Q1 is an NMOS transistor, and the second transistor P1 is a PNP bipolar junction transistor. The third transistor N1 is an NPN bipolar junction transistor. Specifically, the first end of the first transistor Q1 is the drain, the second end of the first transistor Q1 is the source, and the third end of the first transistor Q1 is the gate. The first end of the second transistor P1 is the emitter, the second end of the second transistor P1 is the collector, and the third end of the second transistor P1 is the base. The first end of the third transistor N1 is the collector, the second end of the third transistor N1 is the emitter, and the third end of the third transistor N1 is the base. In this example, the first transistor Q1 acts as a switching transistor to control the current in the drive circuit 3 and improve the response speed. The second transistor P1 and the third transistor N1 act as amplifying transistors to amplify the drive signal and improve the driving capability.

Further, the drive circuit 3 also includes a first capacitor C1 and a Zener diode Z1. The first end of the first capacitor C1 is connected to the third end of the first transistor Q1, and the second end of the first capacitor C1 is grounded through the sampling resistor Rs in the charge and discharge switch circuit 4. The cathode of the Zener diode Z1 is connected to the third end of the first transistor Q1, and the anode of the Zener diode Z1 is grounded through the sampling resistor Rs in the charge and discharge switch circuit 4. The second resistor R2 and the first capacitor C1 form a filtering circuit used to eliminate the oscillating drive signals from the isolation diodes D6 and D7. The Zener diode Z1 is used to stabilize the voltage range of the driving level and prevent burnout of the first transistor Q1.

In an application scenario, the main control circuit 1 outputs the first drive signal to the node between the third resistor R3 and the fourth resistor R4 through the isolation diode D7, while sending a command to close the charge and discharge switch circuit 4, i.e., sending a first control signal to the analog front-end circuit 2. After receiving the first control signal, the analog front-end circuit 2 outputs the second drive signal to the node between the third resistor R3 and the fourth resistor R4 through the isolation diode D6. In this way, both the main control circuit 1 and the analog front-end circuit 2 output high-level signals simultaneously to drive the first transistor Q1. When the voltage across the first capacitor C1 exceeds the turn-on voltage of the first transistor Q1, the first transistor Q1 turns on, the second transistor P1 turns on, and the output voltage VO of the power supply V0 is supplied via the second transistor P1 and the first diode D1 to the third end of the third transistor N1. The third transistor N1 turns on, and the output voltage VO of the power supply V0 is supplied via the third transistor N1 to the switch transistor circuit 42 in the charge and discharge switch circuit 4, thereby controlling the switch transistor circuit 42 to establish electrical conduction. At this point, the second drive signal output by the analog front-end circuit 2 remains stable and no longer oscillates. The main control circuit 1 outputs a low-level signal, and the anode voltage of the isolation diode D7 is lower than the cathode voltage, causing the isolation diode D7 to be in the cutoff state. At this point, only the analog front-end circuit 2 outputs the second drive signal, which is passed through the isolation diode D6 to the node between the third resistor R3 and the fourth resistor R4, thus reducing losses.

In this embodiment, the first end of the first voltage divider resistor circuit 31 is connected to the third end of the first transistor Q1, the second end of the first voltage divider resistor circuit 31 is grounded, and the third end of the first voltage divider resistor circuit 31 is connected to the main control circuit 1 and the analog front-end circuit 2; the first end of the first transistor Q1 is connected to the first end of the second voltage divider resistor circuit 32, and the second end of the first transistor Q1 is grounded; the second end of the second voltage divider resistor circuit 32 is connected to the power supply V0 and the first end of the second transistor P1, the third end of the second voltage divider resistor circuit 32 is connected to the third end of the second transistor P1, and the second end of the second transistor P1 is connected to the charge and discharge switch circuit 4; the first end of the third transistor N1 is connected to the power supply V0, the second end of the third transistor N1 is connected to the drive circuit 3, and the third end of the third transistor N1 is connected to the second end of the second transistor P1. This structure simplifies the drive circuit 3 while ensuring the switching stability of the charge and discharge switch circuit 4, and reducing losses.

In one embodiment, the charge and discharge control circuit also includes a discharge circuit 5; the discharge circuit 5 is connected to the drive circuit 3 and the switch transistor circuit 42, and is used to discharge the energy stored in the parasitic capacitance of the switch transistor circuit 42 when the switch transistor circuit 42 is turned off.

In this embodiment, by connecting the discharge circuit 5 to the drive circuit 3 and the switch transistor circuit 42, it discharges the energy stored in the parasitic capacitance of the switch transistor circuit 42 when the switch transistor circuit 42 is turned off, thus promptly discharging the energy stored in the parasitic capacitance of the switch transistor circuit 42 during charging and discharging abnormalities, improving safety.

In one embodiment, the discharge circuit 5 includes a fourth transistor P4, a fifth transistor P2, and a first discharge resistor circuit 51; the first end of the fourth transistor P4 is connected to the third end of the fifth transistor P2 and the third end of the fourth transistor P4, the second end of the fourth transistor P4 is connected to the charge and discharge switch circuit 4, and the third end of the fourth transistor P4 is connected to the drive circuit 3; the first end of the fifth transistor P2 is connected to the charge and discharge switch circuit 4, the second end of the fifth transistor P2 is connected to the first end of the first discharge resistor circuit 51, and the second end of the first discharge resistor circuit 51 is grounded.

As an example, the fourth transistor P4 is of a different type from the first transistor Q1 and the third transistor N1, and is of the same type as the second transistor P1. The fifth transistor P2 is of the same type as the fourth transistor P4. Exemplarily, both the fourth transistor P4 and the fifth transistor P2 are PNP transistors. The first end of the fourth transistor P4 is the emitter, the second end of the fourth transistor P4 is the collector, and the third end of the fourth transistor P4 is the base. The first end of the fifth transistor P2 is the emitter, the second end of the fifth transistor P2 is the collector, and the third end of the fifth transistor P2 is the base.

In an application scenario, when the voltage of the first capacitor C1 exceeds the turn-on voltage of the first transistor Q1, the first transistor Q1 closes, the second transistor P1 turns on, and the output voltage VO of the power supply V0 is provided through the second transistor P1 to the base of the fourth transistor P4, the base of the fifth transistor P2, and the anode of the first diode D1. Since the EB junctions of the fourth transistor P4 and the fifth transistor P2 are cut off, both the fourth transistor P4 and the fifth transistor P2 are turned off. The output voltage VO of the power supply V0 is then provided through the second transistor P1 and the first diode D1 to the third end of the third transistor N1, turning on the third transistor N1. The output voltage VO of the power supply V0 is then provided through the third transistor N1 to the switch transistor circuit 42 in the charge and discharge switch circuit 4, to control the switch transistor circuit 42 to turn on.

When the analog front-end circuit 2 detects that the voltage of the sampling resistor Rs is too high, it determines that there is overcharge current, overdischarge current, or a short circuit. The analog front-end circuit 2 stops outputting the second drive signal, causing the isolation diode D6 to turn off. The energy stored in the first capacitor C1 is discharged through the first resistor R1 and the second resistor R2. When the voltage of the first capacitor C1 falls below the turn-on voltage of the first transistor Q1, the first transistor Q1 turns off, and the second transistor P1 also turns off. The base of the fourth transistor P4 is pulled to a low level by resistor R5, turning on the fourth transistor P4. This causes the base of the fifth transistor P2 to be pulled to a low level by the fourth transistor P4, turning on the fifth transistor P2. The first diode D1 is turned off, and the base of the third transistor N1 is pulled to a low level by the fourth transistor P4, turning off the third transistor N1. The parasitic capacitance of the switch transistor circuit 42 in the charge and discharge switch circuit 4 begins to discharge through the first discharge resistor circuit 51, ensuring the safety of the charge and discharge control circuit.

In one embodiment, the discharge circuit 5 further includes a sixth transistor P3 and the first diode D1; the anode of the first diode D1 is connected to the drive circuit 3, the third end of the fourth transistor P4, and the third end of the sixth transistor P3, and the cathode of the first diode D1 is connected to the first end of the fourth transistor P4, the drive circuit 3, and the third end of the fifth transistor P2; the first end of the sixth transistor P3 is connected to the drive circuit 3, and the second end of the sixth transistor P3 is connected to the first end of the first discharge resistor circuit 51.

Optionally, the first diode D1 is a Schottky diode.

As an example, the sixth transistor P3 is an NPN transistor. The first end of the sixth transistor P3 is the emitter, the second end of the sixth transistor P3 is the collector, and the third end of the sixth transistor P3 is the base.

In this embodiment, the anode of the first diode D1 is connected to the drive circuit 3, the third end of the fourth transistor P4, and the third end of the sixth transistor P3, while the cathode of the first diode D1 is connected to the first end of the fourth transistor P4, the drive circuit 3, and the third end of the fifth transistor P2. The first end of the sixth transistor P3 is connected to the drive circuit 3, and the second end of the sixth transistor P3 is connected to the first end of the first discharge resistor circuit 51. This configuration forms two discharge paths when both the fifth transistor P2 and the sixth transistor P3 are conducting, thus increasing the discharge speed.

In one embodiment, the switch transistor circuit 42 includes at least two GaN transistors, where the at least two GaN transistors are connected in parallel.

In this example, each GaN transistor is capable of bidirectional conduction and blocking. The first end of the GaN transistor serves as the first drain, the second end as the second drain, and the third end as the gate, enabling a single bidirectional GaN device to replace two back-to-back MOSFETs. In this embodiment, the parallel connection of at least two GaN transistors reduces the on-state impedance of the switch transistor circuit 42. Understandably, the switch transistor circuit 42 may also include at least two MOSFET circuits, each MOSFET circuit comprising two MOSFET transistors connected in series.

For example, a voltage regulator Z2 and a diode D2 are connected in series between the first end and the third end of the switch transistor circuit 42, while a voltage regulator Z3 and a diode D3 are connected in series between the second end and the third end of the switch transistor circuit 42. The voltage regulators Z2 and Z3 are used to stabilize the driving voltage of the switch transistor circuit 42, and the diodes D2 and D3 provide reverse current protection.

In one embodiment, the discharge circuit 5 further includes a second diode SD1 and a second discharge resistor circuit 52. The first end of the second discharge resistor circuit 52 is connected to the switch transistor circuit 42, and the second end of the second discharge resistor circuit 52 is connected to the anode of the second diode SD1. The cathode of the second diode SD1 is connected to the first end of the fifth transistor P2.

For example, the second discharge resistor circuit 52 includes multiple discharge resistors, where the gate of each GaN transistor is connected to the drive circuit 3 via a discharge resistor. Optionally, the second discharge resistor circuit 52 is also connected to the drive circuit 3 via a resistor R9. Exemplarily, the second discharge resistor circuit 52 includes a resistor R8 and a resistor R7. The resistor R8 is connected to the gate of the GaN transistor VGaN1, and the resistor R7 is connected to the gate of the GaN transistor VGaNn. It should be understood that, for ease of illustration, resistors R8 and R7 are merely examples. The gates of the GaN transistors VGaN2 to VGaNn-1 may also be provided with a discharge resistor, and connected to the drive circuit 3 via the resistor R9.

In an application scenario, when the analog front-end circuit 2 stops outputting the second drive signal, the first transistor Q1 is turned off, and the second transistor P1 is also turned off. The bases of the fourth transistor P4 and the fifth transistor P2 are both pulled to a low level by resistor R5. The fourth transistor P4 and the sixth transistor P3 are turned on, and the base of the fifth transistor P2 is pulled to a low level by the fourth transistor P4, causing the fifth transistor P2 to turn on. The first diode D1 is turned off, and the base of the third transistor N1 is pulled to a low level by the fourth transistor P4, causing the third transistor N1 to turn off. The parasitic capacitance of the switch transistor circuit 42 in the charge and discharge switch circuit 4 starts to discharge through the first discharge resistor circuit 51, thereby ensuring the safety of the charge and discharge control circuit. As a result, two discharge paths of the discharge circuit 5 are formed. Discharge loop 1: parasitic capacitance of switch transistor circuit 42 → resistor R7, resistor R8 → second diode SD1 → fifth transistor P2 → resistor R6 → parasitic capacitance of switch transistor circuit 42. Discharge loop 2: parasitic capacitance of switch transistor circuit 42 → resistor R7, resistor R8 → second diode SD1 → sixth transistor P3 → resistor R6 → parasitic capacitance of switch transistor circuit 42. Since the base current of the fifth transistor P2 is amplified by the fourth transistor P4, the discharge current discharged via discharge loop 1 is much greater than that via discharge loop 2. When the voltage across the parasitic capacitance of the switch transistor circuit 42 drops below approximately 1.5V, the discharge loop 1 is cut off. This is because the combined turn-on voltage of the two PN junctions of the fifth transistor P2 and the fourth transistor P4 is about 1.2V, and the turn-on voltage of the second diode SD1 is about 0.3V. The total voltage of the three PN junctions of the fifth transistor P2, the fourth transistor P4, and the second diode SD1 is about 1.5V. At this point, both the fifth transistor P2 and the fourth transistor P4 are turned off, and the discharge loop 1 becomes an open circuit. Only the discharge loop 2 continues to discharge. When the voltage across the parasitic capacitance of the switch transistor circuit 42 is below approximately 0.9V, the combined turn-on voltage of the sixth transistor P3 and the second diode SD1 is about 0.9V, and the discharge loop 2 is also cut off.

In one embodiment, the discharge circuit 5 further includes a third discharge resistor circuit 53. A third discharge resistor circuit 53 is connected in series between the first end and the third end of each GaN transistor.

For example, the third discharge resistor circuit 53 includes resistors R11 and R12. The resistor R11 is connected between the first end and third end of the GaN transistor VGaN1, and the resistor R12 is connected between the first end and third end of the GaN transistor VGaNn. For ease of explanation, resistors R11 and R12 are just examples; a discharge resistor may also be arranged between the first end and third end of GaN transistors VGaN2 to VGaNn-1.

In this example, when the voltage across the parasitic capacitance of the switch transistor circuit 42 is lower than around 0.9V, the voltage across the two PN junctions of the sixth transistor P3 and the second diode SD1 is approximately 0.9V, and the discharge loop 2 is also cut off. In this case, discharge is conducted through discharge loop 3: the parasitic capacitance of the switch transistor circuit 42 → resistor R7, resistor R8 → resistor R9 → sixth transistor P3 → resistor R6 → parasitic capacitance of the switch transistor circuit 42. When the voltage across the parasitic capacitance of the switch transistor circuit 42 is lower than around 0.6V, and the discharge loop 3 is also cut off. At this point, the voltage across the parasitic capacitance of the switch transistor circuit 42 can only be discharged through resistors R11 and R12 to release the remaining 0.6V of energy.

In this embodiment, multiple discharge loops are formed through the discharge circuit 5 described in this application, which improves the discharge speed of the parasitic capacitance and enhances the safety of the charge and discharge control circuit.

In this embodiment, a battery management system is provided, which includes a battery and the charge and discharge control circuit described above; the battery is connected to the charge and discharge control circuit.

As an example, the battery management system may also include several functional modules. These functional modules are connected to the main control circuit 1 in the charge and discharge control circuit. Exemplary functional modules include LCD display, 485 communication, 232 communication, 4G+GPS communication, reverse polarity detection, reset, switch detection, code switch detection, heating control, and buzzer, among others.

The above embodiments are merely used to illustrate the technical solutions of the present application, rather than limit it. Although the application has been described in detail with reference to the foregoing embodiments, it should be understood by those skilled in the art that it is still possible to modify the technical solutions described in the foregoing embodiments, or equivalently replace some technical features thereof. These modifications and equivalents do not make the nature of the corresponding technical solution deviates from the spirit and scope of the present application, and shall be included in the protection scope of the present application.

## Claims

1. A charge and discharge control circuit, comprising a power supply, a charge and discharge switch circuit, an analog front-end circuit, and a drive circuit; wherein
the analog front-end circuit is connected to the drive circuit and configured to output a first drive signal to the drive circuit;
the drive circuit is connected to the power supply and the charge and discharge switch circuit, and configured to establish or disconnect electrical conduction between the power supply and the charge and discharge switch circuit based on the first drive signal;
the charge and discharge switch circuit is configured to connect a battery and a charge and discharge connection terminal, and to establish electrical conduction between the battery and the charge and discharge connection terminal when receiving a first power supply signal provided by the power supply.

2. The charge and discharge control circuit of claim 1, further comprising a main control circuit; wherein
the analog front-end circuit is connected to the charge and discharge switch circuit and the main control circuit, and is configured to collect a charge and discharge signal to the main control circuit; and
the main control circuit is configured to output a first control signal to the analog front-end circuit based on the charge and discharge signal, to enable the analog front-end circuit to output the first drive signal based on the first control signal.

3. The charge and discharge control circuit of claim 2, wherein the main control circuit is further connected to the drive circuit, and is configured to output a second drive signal to the drive circuit based on the charge and discharge signal;
the drive circuit is configured to establish or disconnect electrical conduction between the power supply and the charge and discharge switch circuit based on the first drive signal and the second drive signal.

4. The charge and discharge control circuit of claim 2, wherein the charge and discharge switch circuit comprises a sampling circuit and a switch transistor circuit;
a first end of the sampling circuit is connected to the battery and a ground terminal, a second end of the sampling circuit is connected to a first end of the switch transistor circuit, a second end of the switch transistor circuit is connected to the charge and discharge connection terminal, and a third end of the switch transistor circuit is connected to the drive circuit; and
the analog front-end circuit is connected to the first end and the second end of the sampling circuit.

5. The charge and discharge control circuit of claim 1, wherein the drive circuit comprises a first voltage divider resistor circuit, a second voltage divider resistor circuit, a first transistor, a second transistor, and a third transistor;
a first end of the first voltage divider resistor circuit is connected to a third end of the first transistor, a second end of the first voltage divider resistor circuit is grounded, and a third end of the first voltage divider resistor circuit is connected to the analog front-end circuit;
a first end of the first transistor is connected to a first end of the second voltage divider resistor circuit, and a second end of the first transistor is grounded;
a second end of the second voltage divider resistor circuit is connected to the power supply and a first end of the second transistor, a third end of the second voltage divider resistor circuit is connected to a third end of the second transistor, and a second end of the second transistor is connected to the charge and discharge switch circuit; and
a first end of the third transistor is connected to the power supply, a second end of the third transistor is connected to the drive circuit, and a third end of the third transistor is connected to the second end of the second transistor.

6. The charge and discharge control circuit of claim 4, further comprising a discharge circuit; wherein
the discharge circuit is connected to the drive circuit and the switch transistor circuit, and is configured to discharge energy stored in a parasitic capacitance of the switch transistor circuit when the switch transistor circuit is turned off.

7. The charge and discharge control circuit of claim 6, wherein the discharge circuit comprises a fourth transistor, a fifth transistor, and a first discharge resistor circuit;
a first end of the fourth transistor is connected to a third end of the fifth transistor and a third end of the fourth transistor, a second end of the fourth transistor is connected to the charge and discharge switch circuit, and the third end of the fourth transistor is connected to the drive circuit;
a first end of the fifth transistor is connected to the charge and discharge switch circuit, the second end of the fifth transistor is connected to a first end of the first discharge resistor circuit, and a second end of the first discharge resistor circuit is grounded.

8. The charge and discharge control circuit of claim 7, wherein the discharge circuit further comprises a sixth transistor and a first diode;
an anode of the first diode is connected to the drive circuit, the third end of the fourth transistor is connected to a third end of the sixth transistor, and a cathode of the first diode is connected to the first end of the fourth transistor, the drive circuit is connected to the third end of the fifth transistor;
the first end of the sixth transistor is connected to the drive circuit, and the second end of the sixth transistor is connected to the first end of the first discharge resistor circuit.

9. The charge and discharge control circuit of claim 7, wherein the discharge circuit further comprises a second diode and a second discharge resistor circuit; and
a first end of the second discharge resistor circuit is connected to the switch transistor circuit, a second end of the second discharge resistor circuit is connected to a anode of the second diode, and a cathode of the second diode is connected to the first end of the fifth transistor.

10. The charge and discharge control circuit of claim 6, wherein the switch transistor circuit comprises at least two gallium nitride transistors; and the at least two gallium nitride transistors are connected in parallel.

11. The charge and discharge control circuit of claim 10, wherein the discharge circuit comprises a third discharge resistor circuit; and
one third discharge resistor circuit is connected in series between a first end and a third end of each gallium nitride transistor.

12. A battery management system, comprising a battery and the charge and discharge control circuit of claim 1; and
the battery is connected to the charge and discharge control circuit.
